# EUROPEAN PATENT APPLICATION

(11) **EP 3 479 739 A1**
(43) Date of publication of application: **08.05.2019**
(21) Application number: 17819394.2
(22) Date of filing: 26.05.2017
(51) Int. Cl.: A47F 9/00

(54) **PERFECTED BAR**

(30) Priority: 01.07.2016 ES 201630859 U
(71) Applicant: Acosta Villanueva, Mario, 26500 Calahorra (La Rioja) (ES)
(72) Inventor: Acosta Villanueva, Mario, 26500 Calahorra (La Rioja) (ES)
(74) Representative: Gil-Vega, Victor
(86) International application number: PCT/ES2017/070358
(87) International publication number: WO 2018/002394

(57) **Abstract**

The subject matter of the invention is a perfected bar comprising at least one scale (1) built into a bar structure such that the scale (1) is configured to either be activated automatically when a glass (7) is placed on the scale (1) or to be activated manually by a bartender. The perfected bar that is the subject matter of the invention comprises a top glass panel (2) to protect the scale (1) and also comprises a first screen (3) oriented towards a client and a second screen (4) oriented towards a bartender. The scale also comprises a lighting element (5) configured to graphically show the amount of alcohol provided in the process of preparing a drink.

## Description

### Object of the invention

The present invention refers to an improved bar counter, that includes a list of items in order to control the amount of alcohol served in every drink and to offer to the customers several recreational options that are integrated into the counter, allowing the bar with such a counter to differentiate from others.

### Technical problem to solved and background

Nowadays, the making and sale of mixed drinks, cocktails and liquors are becoming increasingly more popular in business, where not only the perfect preparation of mixed drinks and cocktails is being considered, but other services are also appreciated, as offering a pleasant atmosphere in order to peacefully enjoy a drink.

Additionally, restaurateurs are always trying to secure customers, offering, along with proper conditioning and friendly atmospheres in their business, some device or allure that allows to make their business different from the rest.

Many items have been introduced in the artistic process of making drinks. Among these devices we can highlight, for example, the use of cryogenic devices to cool glasses before serving the drinks.

Also, different kinds of interactive bar counters have been developed, including the services provided from video displaying to visual effects on the bar counter.

Even carts used in the promotion of trademarks, that are moved from one place to another, also require some items that allow to distinguish among brands and, due to the promotional basis of these items, it is beneficial that the device itself can entertain the consumer.

### Description of the invention

The invention discloses herein an improved bar counter that includes at least a scale that it is integrated in the bar counter. The scale is designed to be activated using an automatic mode if a drink is placed on the scale, and it also can be activated using a manual mode by a bartender, so that the exact amount of alcohol poured into the cup can be provided in a more entertaining, alternative and precise way.

The improved bar counter object of the invention includes an upper glass that protects the scale from potential leaking that could shorten its lifetime.

The improved bar counter object of the invention comprises a first screen which is customer-oriented and a second screen which is oriented to the bartenders, so both can monitor the amount of alcohol served during the process of making a drink.

The scale in the improved bar counter according to the invention includes a light element designed to graphically display the amount of alcohol being poured during the process of making a drink.

Finally, the scale object of the invention also includes a computer support set up to store data collected by the scale, therefore allowing to control the total amount of alcohol served in the bar differentiated by the type of alcohol.

### Description of the figures

In order to complete the description and aimed to help the understanding of the main characteristics of the invention, the present description includes a set of figures, as an integral component of it, this set of figures having an illustrative and not limitative purpose, and showing the following:

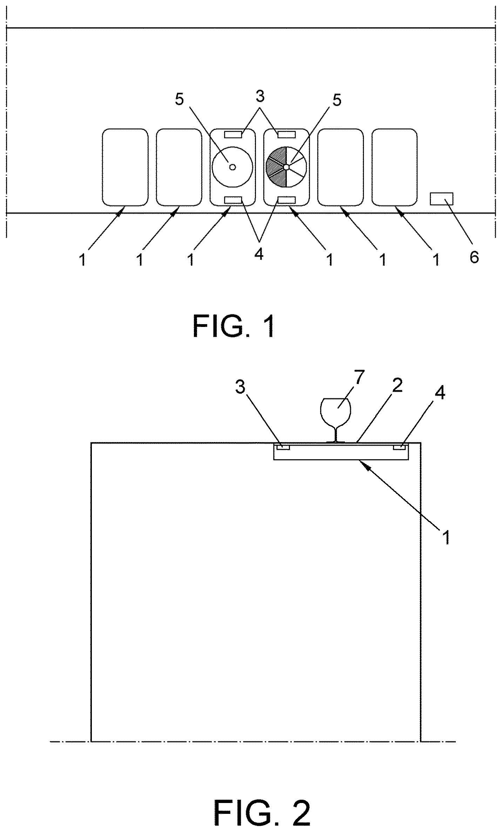

Figure 1 is a plan view of the bar counter object of the invention.
Figure 2 is a side view of the bar counter object of the invention.

The different reference numbers that can be found in the figures correspond to the following elements:
1.- scale,
2.- upper glass,
3.- first screen,
4.- second screen,
5.- light element,
6.- computer support, and
7.- cup.

### Preferred embodiment of the invention

As mentioned above, and as it can be seen in the figures, the object of the invention is a bar counter that integrates a series of digital scales (1), thus making the product more attractive to the consumer and allowing the employer a better control of the amount of alcohol served throughout the day into the bar.

The digital scales (1) in the bar counter object of the invention are inserted on the upper surface of the bar counter and are protected by an upper glass (2). Such upper glass (2) may be dark colour or backlighted, so the digital scale (1) housed into the bar counter is not visible until it is activated, in other words, if there is not a cup (7) on the digital scale (1), the bar counter remains unnoticeable, so no one can imagine that there are digital scales (1) housed inside.

The digital scale (1) is activated when a cup (7) is placed on the aforementioned digital scale (1), activating two screens (3,4), a first screen (3) facing the customer and a second screen (4) focused to the bartender, therefore both, customer and bartender, have the control of the amount of alcohol that is being served in every drink.

The digital scale (1) includes a light element (5) to show the amount of alcohol that is being supplied while the drink is being prepared. Such light element (5) may be a series of compartments that are gradually lighting up while the alcohol is being poured into the cup (7) or a circular sector element around the cup, that switch off when the proper amount of alcohol is reached. The light element (5) offers an adjustable luminous intensity, with the greatest brightness when the right amount of alcohol served in the cup (7) is reached.

The digital scales (1) on the bar counter according to the invention are set up to monitor the filling volume of the cup (7) depending on the different types of alcohol, since different types of alcohol have different densities.

Therefore, before starting to serve a drink, the bartender has to choose the type of alcohol to use into the drink and also the type of drink that is going to serve (a cup, a glass of wine, a shot...), thus the light element (5) on the bar counter is able to show with its lightning the amount of alcohol that is being served and enables the bartender not to pour an excess of alcohol in each cup (7), and also allows the customer to control that the amount of alcohol served is the correct one.

The digital scales (1) in the bar counter object of the invention store the data regarding the total consumption per type of alcohol in a computer support (6), and consequently it enables to monitor the drinks that are sold, the type of drinks served and accordingly facilitates the control of the total revenues and the amount of alcohol stocked in the bar.

Such data let a better way to control the stock of the different types of alcohol, avoiding having a stock of alcohol which it is not consumed and hence preventing misspending on the management of alcohol.

The digital scale (1) has two ways of activating, manually activated by the bartender and by a pressure sensor that detects the cup (7) when it is placed on the scale before pouring the drink.

Moreover, two different methods can be applied to tare the scale (1), that is to set the scale (1) to 0 and to weight the alcoholic drink to be served. Firstly, a manual way, wherein the scale (1) can be set to 0 by the bartender, so once the cup (7) is placed on the scale (1) and the ice is served, the bartender is able to set the scale (1) to 0. Secondly automatically, wherein the scale is set to 0 when a time has elapsed from the detection of a weight (the estimated time that takes the bartender to place the cup (7) and add ice).

Finally, the bar counter object of the invention can also be mobile, assembled into a cart structure, like the bar counters used in punctual promotions of a specific brand and are moved from one place to another.

The description of the preferred embodiment of the invention has been explained in relation to digital scales (1), however the invention is not limited to them and any other type of scale (1) may be used.

The invention is not limited to the embodiment disclosed. Other embodiments in view of the teaching disclosed herewith can be made by those skilled in the art. Consequently, the scope of the invention is defined by the following claims.

## Claims

1. Improved bar counter, **characterized in that** it comprises at least one scale (1) integrated into the structure of the bar counter.

2. Improved bar counter according to claim 1, **characterized in that** the scale (1) is configurated to be automatically activated when a cup (7) is placed on the scale (1).

3. Improved bar counter according to claim 1, **characterized in that** the scale (1) is configurated to be manually activated by a bartender.

4. Improved bar counter according to any prior claims, **characterized in that** it comprises an upper glass (2) designed to protect the scale (1).

5. Improved bar counter according to any prior claims, **characterized in that** it comprises a first screen (3) facing a customer and a second screen (4) targeted to the bartender.

6. Improved bar counter according to any prior claims, **characterized in that** the scale comprises a light element (5) set up to graphically show the amount of alcohol that is being served in the process of making a drink.

7. Improved bar counter according to any prior claims, **characterized in that** it comprises a computer support (6) set up to store data collected from the scales (1).
